(19) Europäisches Patentamt / European Patent Office / Office européen des brevets

(11) **EP 3 793 212 B1**

(12) **EUROPEAN PATENT SPECIFICATION**

(45) Date of publication and mention of the grant of the patent:
**01.11.2023 Bulletin 2023/44**

(21) Application number: **20195776.8**

(22) Date of filing: **11.09.2020**

(51) International Patent Classification (IPC):
**H04R 3/00** *(2006.01)*     **H04M 3/56** *(2006.01)*

(52) Cooperative Patent Classification (CPC):
**H04R 3/005;** H04M 3/568; H04M 2203/509; H04R 2420/01

(54) **MULTI-MICROPHONE SWITCHING METHOD AND SYSTEM FOR CONFERENCE SYSTEM**

MEHRFACHMIKROPHONUMSCHALTVERFAHREN UND -SYSTEM FÜR KONFERENZSYSTEM

PROCÉDÉ ET SYSTÈME DE COMMUTATION MULTI-MICROPHONES POUR SYSTÈME DE CONFÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2019 CN 201910865355**

(43) Date of publication of application:
**17.03.2021 Bulletin 2021/11**

(73) Proprietor: **Yealink (Xiamen) Network Technology Co., Ltd.**
**Xiamen, Fujian 361009 (CN)**

(72) Inventors:
• **ZHOU, Jianming**
**Xiamen, Fujian 361009 (CN)**
• **KANG, Yuanxun**
**Xiamen, Fujian 361009 (CN)**
• **FENG, Wanjian**
**Xiamen, Fujian 361009 (CN)**

(74) Representative: **Meyer, Thorsten et al**
**Meyer Patentanwaltskanzlei**
**Pfarrer-Schultes-Weg 14**
**89077 Ulm (DE)**

(56) References cited:
EP-A1- 3 122 066     WO-A1-2017/157443
WO-A1-2018/164681     US-A1- 2015 030 149

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the field of sound processing, and in particular, to a multi-microphone switching method and system for a conference system.

**BACKGROUND**

In recent years, with the progress and development of the Voice over Internet Protocol (VOIP) technology, there is increasing demand for video conferences. A video conference can implement simultaneous voice communication among multiple users, and has an extensive application prospect in the field of communications. With the rise of intelligent voice, a microphone array sound pickup technology gradually becomes one of the popular technologies at present.

A microphone array is often used in the prior art to solve the problem of a decrease in a recognition rate of remote voice, and noise is eliminated by using a specific beam-forming and adaptive filtering method. In a real conference, there may be multiple built-in microphones that are cascaded, and each built-in microphone is cascaded to a plurality of extended microphones. Generally, a built-in microphone is a directional microphone, and an extended microphone may be a directional microphone or an omnidirectional microphone. Problems such as characteristic differences between different types of microphones, position deviations of the microphones, and an inaccurate target voice direction result in a poor sound pickup effect of the microphones. Moreover, how to select an optimal microphone output channel has become an urgent problem to be solved.

EP 3122066 A1 describes an audio processing system which includes a group of microphones associated with a dynamic network of microphones and a receiver. The receiver is configured to identify a first signal received by a microphone in the plurality of microphones that is designated as a primary microphone, and identify a subset of microphones included in the plurality of microphones, where each microphone in the subset is associated with a respective signal corresponding to the first signal.

WO 2018/164681 A1 describes an apparatus which may include a processor and a memory on which is stored machine readable instructions that are to cause the processor to determine a reference frame from a plurality of frames received at multiple different times, in which each of the plurality of frames includes audio signal data, and in which the reference frame includes audio signal data that identifies a highest audio signal level among audio signals identified in the plurality of frames.

**SUMMARY**

An objective of this application is to provide a multi-microphone switching method and system for a conference system, to solve the technical problem of selecting a microphone voice output channel with good sound quality in an environment of sound pickup using multiple microphones.

The invention is defined by the features of the independent claims.

According to a first aspect, the application provides a multi-microphone switching method for a conference system according to claim 1.

In some specific embodiments, before step S1, the method further includes: eliminating a remote voice signal by using an Acoustic Echo Cancellation (AEC) algorithm and a Voice Activity Detection (VAD) algorithm, and outputting the microphone voice signals with voice signal strength greater than a first threshold value. Remote echo is effectively eliminated by using the AEC algorithm, and logarithm values are calculated by using the VAD algorithm. Microphone input voice signals whose input voice signal logarithm values are greater than the first threshold value are used as the voice signals in step S1. This helps eliminate noise and noise signals, and improves the probability of selecting a microphone voice output channel with good sound quality.

In some specific embodiments, a range of the first threshold value may be set to [-40 dB, - 30 dB].

In some specific embodiments, the alignment step in S2 in the method includes: storing the microphone voice signals by frames, calculating a sample point position of a maximum correlation value between the voice signal acquired by each microphone and the reference microphone voice signal $q_1$, obtaining the relative delay of each microphone voice signal, and performing alignment processing, where a calculation formula of the relative delay is shown by formula (1) below:

$$R_i(n) = \sum_{j=0}^{N-1} q_1(j+n) q_i(j), i = 2,3,4,5 \qquad (1)$$

In formula (1), N represents the number of samples corresponding to a maximum voice delay, n is a positive integer which ranges from 1 to N, i represents an i$^{th}$ microphone voice signal, j represents a j$^{th}$ sample point of a microphone voice signal, $q_1(j+n)$ represents a value of a $(j+n)^{th}$ point in an acquisition frame of the reference microphone voice signal, $q_i(j)$ represents a value of a j$^{th}$ point of an i$^{th}$ microphone, and $R_i(n)$ represents a linear correlation value between the i$^{th}$ microphone voice signal and the reference microphone voice signal $q_1$.

In some specific embodiments, the microphone voice signals are truncated and stored by frames, and a frame size of each frame is 8 ms or 10 ms to facilitate delay alignment and energy calculation in subsequent steps.

In some specific embodiments, the voice energy in step S3 in the method is obtained by calculating a root-mean-square value of each frame of respective aligned microphone voice signal, where a calculation formula of the root-mean-square value is shown by formula (2) below:

$$RMS_i = \sqrt{\frac{x_{i1}^2 + x_{i2}^2 + \cdots + x_{iL}^2}{L}}, i = 1, 2, \ldots L \qquad (2)$$

In formula (2), voice data of an i$^{th}$ microphone after the alignment is expressed as: $x_{i1}, x_{i2}, \ldots, x_{iL}$, where L represents a voice frame length.

In some specific embodiments, the voice frame length includes at least 10 frames of the microphone voice signal, and a frame size of each voice frame is set to 10 ms. The conference system is a real-time system, and a frame size of microphone voice transmitted each time is 8 ms or 10 ms. When the root-mean-square value is calculated to represent the voice energy of the microphone, the voice frame length cannot be excessively small. In this preferred solution, the frame size of each frame is set to 10 ms, and 10 consecutive frames of the voice signal are taken to calculate a mean value, so that the calculated root-mean-square value is moderate, which facilitates tracking.

In some specific embodiments, the method further includes: based on tracking of the voice energy, switching an output channel of the microphone voice signals by using a smoothing technology. The voice input signals of the microphones change significantly, and noise in a switching process can be voided by means of voice smoothing.

According to the invention, the energy tracking in the method includes short-term tracking and long-term tracking, switching from a mute state to a voice state is implemented based on the short-term tracking, and switching of the output channel of the microphone voice signals in a long-term mute state or voice state is implemented based on the long-term tracking. When a microphone channel is switched from the mute state to the voice state, the short-term tracking with relatively short recording intervals (for example, the interval is 200 ms) is used, to avoid delayed switching. When a microphone channel stays in the voice state or the mute state for a long time, the long-term tracking with relatively long recording intervals (for example, the interval is 2s) is used, to avoid frequent system running and reduce costs.

In some specific embodiments, the smoothing adopts a sinusoid, and specific calculation formulas are shown by formula (4) and formula (5) below:

$$smooth1(i) = 0.5 * (\sin(\frac{i*\pi}{L} + \frac{\pi}{2}) + 1), i = 0, 1, \ldots, L - 1 \qquad (4)$$

$$smooth2(i) = 1 - smooth1(i), i = 0, 1, \ldots, L - 1 \qquad (5)$$

Assuming that a current microphone voice signal is $x_1$ and current maximum voice energy is $x_2$, a microphone voice signal x after the smoothing is:

$$x_{(i)} = smooth1(i) * x_{1(i)} + smooth2(i) * x_{2(i)}, i = 0, 1, \ldots, L - 1 \qquad (6)$$

In some specific embodiments, the method further includes scene recognition, which specifically includes:

maintaining a current microphone output channel in response to determining that a current state is a mute state by a voice detection module;
outputting a microphone channel with maximum voice energy in response to tracking of voice energy increasing from the mute state to be greater than a first threshold in a long term;

maintaining the current microphone output channel in response to tracking of a voice energy difference between two microphone channels being less than a second threshold;

switching the microphone output channel to a microphone output channel with increasing voice energy in response to tracking of the voice energy difference between two microphone channels being greater than the second threshold; and

increasing the second threshold and maintaining the current microphone output channel in response to tracking of a duplex scene.

According to a second aspect, the application provides a computer readable storage medium according to claim 8.

According to a third aspect, the application provides a multi-microphone switching system for a conference system according to claim 9.

The multi-microphone switching method and system for a conference system provided in the embodiments of this application include a voice detection unit, a delay estimation unit, and an energy calculation unit. The voice detection unit is configured to randomly select one of microphone voice signals as a reference microphone voice signal in response to detection of voice signals from respective microphone input channels; the delay estimation unit is configured to estimate a relative delay of each remaining microphone voice signal by using the reference microphone voice signal, and align the microphone voice signals by frames; and the energy calculation unit is configured to calculate voice energy of each aligned microphone voice signal, and determine an output channel of the microphone voice signals in conjunction with scene recognition. This application helps select an output channel of microphone voice signals with best sound quality in the case of sound pickup using multiple microphones.

## BRIEF DESCRIPTION OF THE DRAWINGS

Other features, objectives and advantages of this application will become more apparent upon reading the detailed description of the non-restrictive embodiments with reference to the following accompanying drawings.

FIG. 1 is a schematic diagram of steps of a multi-microphone switching method for a conference system according to an embodiment of this application;

FIG. 2 is a flowchart of a multi-microphone switching method for a conference system according to an embodiment of this application;

FIG. 3 is a schematic diagram of a voice smoothing factor of a multi-microphone switching method for a conference system according to an embodiment of this application;

FIG. 4 is a schematic structural diagram of a multi-microphone switching system for a conference system according to an embodiment of this application;

FIG. 5 is a schematic diagram of microphone arrays according to an embodiment of this application; and

FIG. 6 is a schematic structural diagram of a computer system of an electronic device suitable for implementing some embodiments of this application.

## DETAILED DESCRIPTION

This application will be further described in detail below in conjunction with the accompanying drawings and embodiments. It may be understood that the specific embodiments described herein are merely intended to explain the related invention, rather than to limit the present invention. It should also be noted that, for convenience of description, only the parts related to the present invention are shown in the accompany drawings.

It should be noted that the embodiments in this application and features in the embodiments may be combined with each other if no conflict occurs. This application will be described in detail below with reference to the accompanying drawings and the embodiments.

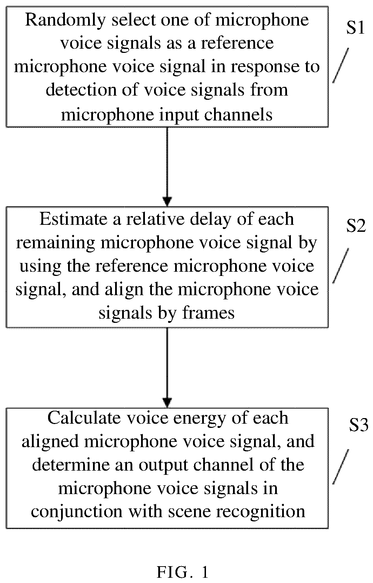

FIG. 1 is a schematic diagram of steps of a multi-microphone switching method for a conference system according to an embodiment of this application. As shown in FIG. 1:

S1: randomly select one of microphone voice signals as a reference microphone voice signal in response to detection of voice signals from microphone input channels.

In this step, the voice signals from the microphone input channels are detected, and a microphone voice signal from one channel is randomly selected as the reference voice signal. Each microphone may be a built-in microphone or an extended microphone, and is at a different distance from a loudspeaker. It is detected that each microphone input channel has different voice strength. In the voice detection step, strength of the input voice signal of each microphone is acquired, to perform delay estimation in step S2.

S2: estimate a relative delay of each remaining microphone voice signal by using the reference microphone voice signal, and align the microphone voice signals by frames.

In this step, the voice signals acquired by the microphones have different delays due to different microphone types, such as a built-in microphone and an extended microphone, a position relation between the microphone and the loudspeaker, and other factors. After the input voice signals acquired from the microphones are stored by frames, delays between the input voice signals of the microphones and the reference microphone signal are estimated respectively, and the aligned microphone voice signals are aligned with the reference microphone voice signal by frames. Voice capability computing or mixing processing can be performed only based on the aligned input voice signals of the microphones.

S3: calculate voice energy of each aligned microphone voice signal, and determine an output channel of the microphone voice signals in conjunction with scene recognition.

In this step, voice energy of each frame of the aligned voice input signal of each microphone is calculated, voice input energy of each microphone is tracked intermittently by using an adaptive processing and analysis process, and the output channel of the microphone voice signals is determined in conjunction with scene recognition.

In some preferred embodiments, a remote voice signal is eliminated by using an Acoustic Echo Cancellation (AEC) algorithm and a Voice Activity Detection (VAD) algorithm, and the microphone input voice signals with voice signal strength greater than a first threshold value are outputted as the voice signals in step S1. In a real conference, there may be multiple built-in microphones that are cascaded, and each built-in microphone is cascaded to a plurality of extended microphones. Generally, a built-in microphone is a directional microphone, and an extended microphone may be a directional microphone or an omnidirectional microphone. By using the AEC algorithm and the VAD algorithm, remote echo and noise interference of which a logarithm value in the VAD algorithm is less than a first threshold can be effectively eliminated, thus improving the probability of selecting a microphone voice output channel with good sound quality.

In some specific embodiments, a range of the first threshold value may be set to [-40 dB, - 30 dB].

In some specific embodiments, the microphone voice signals are truncated and stored by frames, and a frame size of each frame is 8 ms or 10 ms to facilitate delay alignment and energy calculation in subsequent steps.

In some preferred embodiments, the alignment step in S2 includes: storing the microphone voice signals by frames, calculating a sample point position of a maximum correlation value between the voice signal acquired by each microphone and the reference microphone voice signal $q_1$, obtaining the relative delay of each microphone voice signal, and performing alignment processing, where a calculation formula of the relative delay is shown by formula (1) below:

$$R_i(n) = \sum_{j=0}^{N-1} q_1(j+n) q_i(j), i = 2,3,4,5 \ldots \qquad (1)$$

In formula (1), N represents the number of samples corresponding to a maximum voice delay, n is a positive integer from 1 to N, i represents an $i^{th}$ microphone voice signal, j represents a $j^{th}$ sample point of a microphone voice signal, $q_1(j+n)$ represents a value of a $(j+n)^{th}$ point in an acquisition frame of the reference microphone voice signal, $q_i(j)$ represents a value of a $j^{th}$ point of an $i^{th}$ microphone, and $R_i(n)$ represents a linear correlation value between the $i^{th}$ microphone voice signal and the reference microphone voice signal $q_1$.

By converting n corresponding to the linear correlation value of each microphone voice signal into a time t, a delay time of each microphone voice channel is obtained. A conversion process is shown by the following formula:

$$t = \frac{n}{\text{sampling frequency}}$$

In some preferred embodiments, the voice energy in step S3 is obtained by calculating a root-mean-square value of each frame of each aligned microphone voice signal, where a calculation formula of the root-mean-square value is shown by formula (2) below:

$$RMS_i = \sqrt{\frac{x_{i1}^2 + x_{i2}^2 + \cdots + x_{iL}^2}{L}}, i = 1,2,\ldots L \qquad (2)$$

In formula (2), voice data of an $i^{th}$ microphone after the alignment is expressed as: $x_{i1}, x_{i2}, \ldots, x_{iL}$, where L represents a voice frame length.

Since the conference system is a real-time system, a frame size of microphone voice transmitted each time is 8 ms or 10 ms. When the root-mean-square value is calculated to represent the voice energy of the microphone, the voice frame length cannot be excessively small. In this preferred solution, the frame size of each frame is set to 10 ms, and 10 consecutive frames of the voice signal are taken to calculate a mean value, so that the calculated root-mean-square value is moderate, which facilitates tracking.

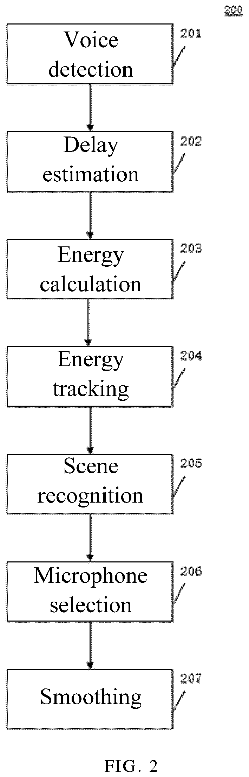

Referring to FIG. 2, FIG. 2 is a flowchart of a multi-microphone switching method for a conference system according to an embodiment of this application. The method includes the following steps:

Step 201: voice detection. In response to detection of signal strength of each microphone input channel, a remote voice signal is eliminated by using an AEC algorithm, and it is determined, by using a VAD algorithm, whether the signal strength of each microphone input channel is greater than a specified first threshold, and it is determined whether a current state is a voice state according to the specified first threshold. The voice detection helps eliminate noise and noise signals, and improves a probability of selecting a microphone voice output channel with good sound quality.

Step 202: delay estimation. Delays of other microphone voice signals are estimated based on a reference microphone voice signal, and the microphone voice signals are aligned by frames, where the reference microphone voice signal is one of the microphone voice signals. Voice capability computing or mixing processing can be performed only based on the aligned input voice signals of the microphones.

Step 203: energy calculation. Voice energy of each aligned microphone voice signal is calculated, mainly including framing input voice data of each microphone and calculating a root-mean-square value of each frame of signal of each microphone. The root-mean-square value can directly reflect the magnitude of voice energy, which facilitates tracking with the voice energy.

Step 204: energy tracking. The voice input energy of each microphone is tracked intermittently by using an adaptive processing and analysis process. A long-term tracking manner or a short-term tracking manner is selected according to a microphone working state, to perform scene recognition.

Step 205: scene recognition. A scene mode of each microphone voice channel is obtained through matching according to the voice detection result of step 201 and the energy tracking result of step 204.

Step 206: microphone selection. A microphone voice channel corresponding to the scene recognized in step 205 is outputted.

Step 207: smoothing. In a scene mode where a single person walks from one microphone to another microphone and a scene mode where two people alternately speak to two microphones respectively, switching between the microphones is implemented by means of smoothing.

In some preferred embodiments, when voice energy acquired from the voice output channel of one of the two microphones decreases gradually while voice energy acquired from the voice output channel of the other microphone increases gradually and an energy difference exceeds a second threshold, smoothing needs to be performed; otherwise, pop noise may occur as the microphone voice energy changes too significantly

In some preferred embodiments, a range of the second threshold may be set to [3 dB, 6 dB], and different second threshold values may be set according to the specific scene recognition. For example, the second threshold value may be increased to 6 dB upon recognition of a duplex scene.

The smoothing adopts a sinusoid, and specific calculation formulas are as shown by formula (4) and formula (5) below:

$$smooth1(i) = 0.5 * (\sin(\frac{i*\pi}{L} + \frac{\pi}{2}) + 1), i = 0,1, \dots, L \quad (4)$$

$$smooth2(i) = 1 - smooth1(i), i = 0,1, \dots, L - 1 \quad (5)$$

Assuming that a current microphone voice is $x_1$ and current maximum voice energy is $x_2$, a voice x after the smoothing is:

$$x_{(i)} = smooth1(i) * x_{1(i)} + smooth2(i) * x_{2(i)}, i = 0,1, \dots, L - 1 \quad (6)$$

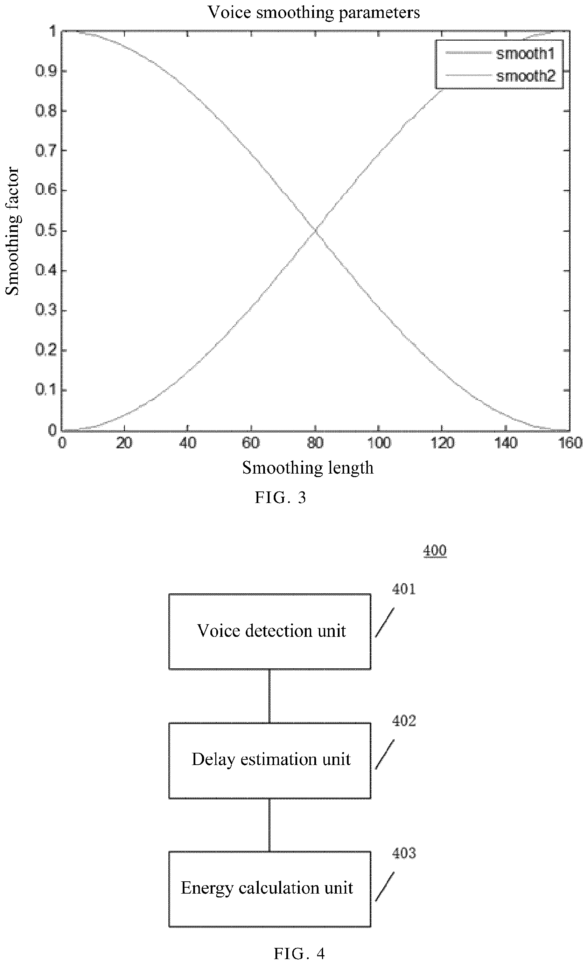

FIG. 3 is a schematic diagram of a voice smoothing factor of a multi-microphone switching method for a conference system according to an embodiment of this application. The abscissa represents a smoothing length, and the ordinate represents a smoothing factor. *smooth*1 represents a voice output signal of a microphone with decreasing voice energy, and *smooth!* represents a voice output signal of a microphone with increasing voice energy. The value of the smoothing factor of *smooth!* gradually decreases from 1 to 0, and the value of the smoothing factor of *smooth!* increases from 0 to 1, thus completing smooth switching between two microphone voice output channels.

According to the invention, the energy tracking includes short-term tracking and long-term tracking. Switching from a mute state to a voice state is implemented based on the short-term tracking, and switching of the microphone channel in a long-term mute state or voice state is implemented based on the long-term tracking. The short-term tracking is tracking of voice energy in a front T1 time, for example, front 200 ms, and recording is performed at relatively short intervals. The long-term tracking is tracking of voice energy in a front T2 time, for example, 2s, and each recording lasts a relatively long time.

It should be noted that, upon detection that the microphone output channels are in a mute state, noise energy of the microphones is compared. A microphone with high noise energy is closer to a noise source, and a microphone with a low noise energy is farther away from the noise source. When a noise energy difference between the two is greater than the second threshold, the microphone channel with the lower noise energy is outputted.

In addition, upon detection that one microphone output channel is in a mute state or a long-term output state and another microphone has high input voice energy or high noise in a short period of time, and an energy difference between the two is greater than the second threshold, the current microphone voice output channel is maintained.

In addition, this application further provides a multi-microphone switching system for a conference system. As shown in FIG. 4, the system includes a voice detection unit 401, a delay estimation unit 402, and an energy calculation unit 403. When the voice detection unit 401 detects voice signals of microphone input channels, the voice signals are stored by frames and enter the delay estimation unit 402 for delay estimation. Then, the voice signals are aligned by frames. The energy calculation unit calculates voice energy of each microphone input channel, and outputs the microphone voice signals in conjunction with scene recognition.

In a specific embodiment, the voice detection unit 401 is configured to randomly select one of microphone voice signals as a reference microphone voice signal in response to detection of voice signals from microphone input channels.

The delay estimation unit 402 is configured to estimate a relative delay of each remaining microphone voice signal by using the reference microphone voice signal, and align the microphone voice signals by frames.

The energy calculation unit 403 is configured to calculate voice energy of each aligned microphone voice signal, and determine an output channel of the microphone voice signals in conjunction with scene recognition.

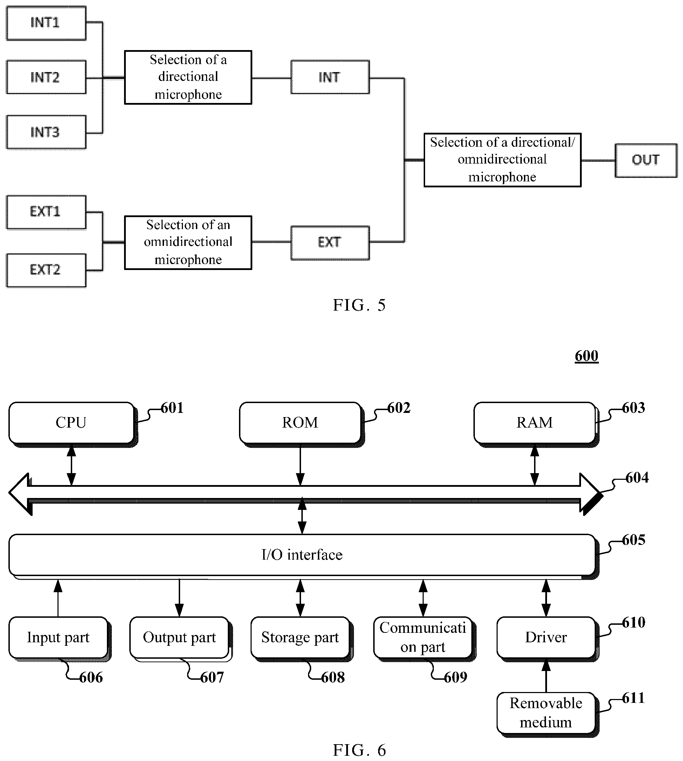

FIG. 5 is a schematic diagram of a sound pickup part of a multi-microphone conference system according to an embodiment of the present invention. INT represents a built-in microphone, and EXT represents an extended microphone. In a real conference, a plurality of built-in microphones, such as INT1, INT2, and INT3, may be cascaded, and a plurality of extended microphones, such as EXT1 and EXT2, may be cascaded. Generally, a built-in microphone is a directional microphone, and an extended microphone may be a directional microphone or an omnidirectional microphone. In this embodiment, it is configured that all three built-in microphones are directional microphones, and two extended microphones are both omnidirectional microphones.

In some preferred embodiments, there may be the following scene modes:

When the voice detection unit detects that the voice signals of the microphone input channels are in a mute state (someone may be speaking at the remote end, but no one is speaking at the local end, and signal strength is less than the first threshold according to the VAD algorithm), the current microphone voice output channel is maintained.

When a signal person starts to speak to a microphone and voice input signal strength of the current microphone increases from zero to be greater than the first threshold, a microphone output channel with maximum voice energy is quickly switched to based on voice detection and short-term energy tracking.

When a single person is speaking to a microphone, the voice input signal strength of the current microphone is constantly greater than the first threshold, and voice energy acquired from the current microphone is maximum, the current microphone voice output channel with the maximum voice energy is maintained in conjunction with long-term energy tracking.

When a single person is in the middle of two microphones, voice input signal strength of the two microphones is greater than the first threshold and a signal strength difference is less than the second threshold, which means that voice energy acquired by the two microphones does not differ greatly according to voice detection and long-term tracking, the current microphone voice output channel is maintained.

When a single person walks from one microphone to another microphone, input voice energy close to the sound source decreases gradually, and input voice energy away from the sound source increases gradually. When a voice energy difference between the two microphones is greater than the second threshold, the microphone output channel with the increasing voice energy is switched to by using short-term tracking and the voice smoothing technology.

When two people alternately speak to two microphones respectively, energy acquired by one microphone is relatively high in a period of time, and energy acquired by the other microphone is relatively high in the next period of time. When a voice energy difference between the two microphones is greater than the second threshold, the microphone output channel with the increasing voice energy is switched to by using short-term tracking and the voice smoothing technology.

When two or more people speak to two or more microphones simultaneously, two or more microphone voice input channels all acquire voice signals with signal strength greater than the first threshold value while a difference between input voice energy of the microphones is less than the second threshold, and the microphone output channel with the maximum voice energy changes quickly. The voice signals of the microphone input channels are acquired by means of delay estimation and are aligned by frames. Voice energy of each microphone is calculated, and signals of two microphone input channels with maximum voice energy are selected for mixing, and a microphone voice channel after the mixing is outputted.

When one of the microphones is closer to a noise source, in a mute period, values of noise energy of the microphone voice input channels are compared. A microphone with higher energy is closer to the noise source, and a microphone with lower energy is farther away from the noise source. The noise energy of both microphones is greater than the first threshold. By using voice detection and short-term energy tracking, a microphone voice output channel with lower noise energy is selected.

When transient noise or short-time interposition occurs, short-time noise (with high energy) occurs in a mute period, or another microphone has a short-time high-energy voice or noise (with high energy) in a voice period. By using voice detection and short-term tracking, the current microphone voice output channel is maintained.

When a duplex scene is detected through voice detection, the second threshold is increased, and the current microphone voice output channel is maintained, or a microphone channel with the best duplex effect is switched to.

Refer to FIG. 6 below, which is a schematic structural diagram of a computer system 600 of an electronic device suitable for implementing the embodiments of this application. The electronic device shown in FIG. 6 is merely an example, and should not cause any limitation to the functions and application range of the embodiments of this application.

As shown in FIG. 6, the computer system 600 includes a central processing unit (CPU) 601, which can perform various suitable actions and processing according to a program in a read-only memory (ROM) 602 or a program loaded from a storage part 608 to a random access memory (RAM) 603. The RAM 603 further stores various programs and data required for operations of the system 600. The CPU 601, the ROM 602, and the RAM 603 are mutually connected through a bus 604. An input/output (I/O) interface 605 is also connected to the bus 604.

The following components are connected to the I/O interface 605: an input part 606 including a keyboard, a mouse, and the like; an output part 607 including a liquid crystal display (LCD), a loudspeaker, and the like; the storage part 608 including a hard disk; and a communication part 609 including a network interface card such as a local area network (LAN) card or a modem. The communication part 609 executes communication processing via a network such as the Internet. A driver 610 may also be connected to the I/O interface 605 as required. A removable medium 611, such as a magnetic disk, an optical disc, a magneto-optical disc, a semiconductor memory, or the like, is installed on the driver 610 as required, so that a computer program read therefrom can be installed in the storage part 608 as required.

Particularly, according to the embodiments of the present disclosure, the process described above with reference to the flowchart may be implemented as a computer software program. For example, the embodiment of the present disclosure includes a computer program product, which includes a computer program carried by a computer readable medium. The computer program includes program code for executing the method shown in the flowchart. In this embodiment, the computer program may be downloaded from a network by means of the communication part 609 and installed, and/or be installed from the removable medium 611. When the computer program is executed by the CPU 601, the functions defined in the method of this application are executed.

It should be noted that, the computer readable medium in this application may be a computer readable signal medium or a computer readable storage medium or a combination thereof. For example, the computer readable medium may be, but is not limited to, electric, magnetic, optical, electromagnetic, infrared, or semiconductor system, apparatus or device, or any combination of the above. A more specific example of the computer readable medium includes: an electric connector with one or more wires, a portable computer magnetic disk, a hard drive, a random access memory (RAM), a read-only memory (ROM), an erasable programmable read-only memory (EPROM or flash drive), an optical fiber, a compact disk read-only memory (CD-ROM), an optical storage device, a magnetic storage device, and any proper combination of the above. In this application, the computer readable medium may any tangible medium containing or storing a program, and the program may be used by or used in combination with an instruction execution system, apparatus or device. In this application, the computer readable signal medium may include a data signal propagated in a baseband or propagated as a part of a carrier, and carries computer readable program code. Such a propagated data signal may be in multiple forms, including, but are not limited to an electromagnetic signal, an optical signal, or any proper combination of the above. The computer readable signal medium may also be any computer readable medium except the computer readablestorage medium. The computer readable medium may send, propagate or transmit a program used by or used in combination with an instruction execution system, apparatus or device. The program code contained in the computer readable medium may be transmitted by using any suitable medium, including, but is not limited to radio, an electric wire, an optical fiber, RF, and the like, or any proper combination of the above.

Computer program code for executing the operations in this application may be compiled by using one or more program design languages or a combination thereof. The programming languages include object oriented programming languages, such as Java, Smalltalk, and C++, and conventional procedural programming languages, such as C or similar programming languages. The program code can be executed fully on a user computer, executed partially on a user computer, executed as an independent software package, executed partially on a user computer and partially on a remote computer, or executed fully on a remote computer or a server. In a circumstance in which a remote computer is involved, the remote computer may be connected to a user computer via any type of network, including a local area network (LAN) or a wide area network (WAN), or may be connected to an external computer (for example, connected via the Internet by using an Internet service provider).

The flowcharts and block diagrams in the accompanying drawings illustrate system architectures, functions and operations that may be implemented by the system, method and computer program product according to the embodiments of this application. In this regard, each block in the flowcharts or block diagrams may represent a module, a program segment or a part of code, and the module, the program segment or the part of code includes one or more executable instructions for implementing specified logic functions. It should also be noted that, in some alternative implementations, functions marked in the blocks may also take place in an order different from the order marked in the accompanying drawings. For example, two consecutive blocks can actually be executed substantially in parallel, and they may sometimes be executed in a reverse order, which depends on involved functions. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

Related modules described in the embodiments of this application may be implemented by software, or may be implemented by hardware. The described modules may also be set in a processor, which, for example, may be described as a processor including a voice detection unit, a display estimation unit, and an energy calculation unit. Names of these modules do not limit the modules in some cases. For example, the audio detection unit may alternatively be described as "a unit for randomly selecting one of microphone voice signals as a reference microphone voice signal in response to detection of voice signals from microphone input channels."

In another aspect, this application further provides a computer readable medium. The computer readable medium may be contained in the electronic device described in the foregoing embodiment, or may exist alone without being assembled in the electronic device. The computer readable medium may carry one or more programs. When being executed by the electronic device, the one or more programs cause the electronic device, which includes a voice detection unit, a delay estimation unit, and an energy calculation unit, to perform the multi-microphone switching method for a conference system according to the foregoing embodiment of this application The voice detection unit is configured to randomly select one of microphone voice signals as a reference microphone voice signal in response to detection of voice signals from microphone input channels; the delay estimation unit is configured to estimate a relative delay of each remaining microphone voice signal by using the reference microphone voice signal, and align the microphone voice signals by frames; and the energy calculation unit is configured to calculate voice energy of each aligned microphone voice signal, and determine an output channel of the microphone voice signals in conjunction with scene recognition.

## Claims

1. A multi-microphone switching method for a conference system, comprising:

   S1: randomly selecting one of microphone voice signals as a reference microphone voice signal in response to detection of voice signals from respective microphone input channels;
   S2: estimating a relative delay of each remaining microphone voice signal by using the reference microphone voice signal, and aligning the microphone voice signals by frames; and
   S3: calculating voice energy of each aligned microphone voice signal, and determining an output channel of the microphone voice signals in conjunction with scene recognition; wherein
   the method further comprises:

   based on tracking of the voice energy, switching an output channel of the microphone voice signals by means of smoothing; and wherein
   the tracking of the voice energy comprises short-term tracking and long-term tracking, switching from a mute state to a voice state is implemented based on the short-term tracking, and switching of the output channel of the microphone voice signals in a long-term mute state or voice state is implemented based on the long-term tracking; and
   the short-term tracking is tracking of voice energy in a front T1 time, wherein T1 is a relatively short recording interval, such as 200ms;
the long-term tracking is tracking of voice energy in a front T2 time, wherein T2 is a relatively long recording interval, such as 2s.

2. The multi-microphone switching method for a conference system according to claim 1, wherein before step S1, the method further comprising: eliminating a remote voice signal by using an Acoustic Echo Cancellation (AEC) algorithm and a Voice Activity Detection (VAD) algorithm, and outputting the microphone voice signals with voice signal strength greater than a first threshold value.

3. The multi-microphone switching method for a conference system according to claim 1, wherein the alignment step in S2 comprises: storing the microphone voice signals by frames, calculating a sample point position of a maximum correlation value between the voice signal acquired by each microphone and the reference microphone voice signal $q_1$, obtaining the relative delay of each microphone voice signal, and performing alignment processing; a calculation formula of the relative delay is shown by formula (1):

$$R_i(n) = \sum_{j=0}^{N-1} q_1(j+n)q_i(j), i = 2,3,4,5 \qquad (1)$$

wherein in formula (1), N represents a number of samples corresponding to a maximum voice delay, n is a positive integer which ranges from 1 to N, i represents an $i^{th}$ microphone voice signal, j represents a $j^{th}$ sample point of a microphone voice signal, $q_1(j+n)$ represents a value of a $(j+n)^{th}$ point in an acquisition frame of the reference microphone voice signal, $q_i(j)$ represents a value of a $j^{th}$ point of an $i^{th}$ microphone, and $R_i(n)$ represents a linear correlation value between the $i^{th}$ microphone voice signal and the reference microphone voice signal $q_1$.

4. The multi-microphone switching method for a conference system according to claim 1, wherein the voice energy in step S3 is obtained by calculating a root-mean-square value of each frame of respective aligned microphone voice signal; a calculation formula of the root-mean-square value is shown by formula (2):

$$RMS_i = \sqrt{\frac{x_{i1}^2 + x_{i2}^2 + \cdots + x_{iL}^2}{L}}, i = 1,2,\dots L \qquad (2)$$

wherein in formula (2), voice data of an $i^{th}$ microphone after the alignment is expressed as: $x_{i1}, x_{i2}, \dots, x_{iL}$, wherein L represents a voice frame length.

5. The multi-microphone switching method for a conference system according to claim 4, wherein the voice frame length comprises at least 10 frames of the microphone voice signal, and a frame size of each voice frame is set to 10ms.

6. The multi-microphone switching method for a conference system according to claim 1, wherein the smoothing adopts a sinusoid, and specific calculation formulas are shown by formula (4) and formula (5):

$$smooth1(i) = 0.5 * (\sin(\frac{i*\pi}{L} + \frac{\pi}{2}) + 1), i = 0,1,\dots,L-1 \qquad (4)$$

$$smooth2(i) = 1 - smooth1(i), i = 0,1,\dots,L-1 \quad (5)$$

assuming that a current microphone voice signal is $x_1$ and current maximum voice energy is $x_2$, a microphone voice signal x after the smoothing is:

$$x_{(i)} = smooth1(i) * x_{1(i)} + smooth2(i) * x_{2(i)}, i = 0,1,\dots,L-1 \quad (6)$$

7. The multi-microphone switching method for a conference system according to claim 1, wherein the scene recognition specifically comprises:

maintaining a current microphone output channel in response to determining that a current state is a mute state by a voice detection unit (401);

outputting a microphone channel with maximum voice energy in response to a voice input signal strength of a current microphone is constantly greater than a first threshold and voice energy acquired from the current microphone is maximum in conjunction with long-term tracking;

maintaining the current microphone output channel in response to tracking of a voice energy difference between two microphone channels being less than a second threshold;

switching the microphone output channel to a microphone output channel with increasing voice energy in response to tracking of the voice energy difference between two microphone channels being greater than the second threshold; and

increasing the second threshold and maintaining the current microphone output channel in response to tracking of a duplex scene.

8.  A computer readable storage medium storing a computer program, wherein the program implements the method according to any one of claims 1 to 7 when being executed by a processor.

9.  A multi-microphone switching system for a conference system, comprising:

a voice detection unit (401), configured to randomly select one of microphone voice signals as a reference microphone voice signal in response to detection of voice signals from respective microphone input channels;
a delay estimation unit (402), configured to estimate a relative delay of each remaining microphone voice signal by using the reference microphone voice signal, and align the microphone voice signals by frames; and
an energy calculation unit (403), configured to calculate voice energy of each aligned microphone voice signal, and determine an output channel of the microphone voice signals in conjunction with scene recognition; wherein the voice detection unit (401) is further configured to:

based on tracking of the voice energy, switch an output channel of the microphone voice signals by means of smoothing; and wherein
the tracking of the voice energy comprises short-term tracking and long-term tracking, switching from a mute state to a voice state is implemented based on the short-term tracking, and switching of the output channel of the microphone voice signals in a long-term mute state or voice state is implemented based on the long-term tracking; and
the short-term tracking is tracking of voice energy in a front T1 time, wherein T1 is a relatively short recording interval, such as 200ms;
the long-term tracking is tracking of voice energy in a front T2 time, wherein T2 is a relatively long recording interval, such as 2s.

**Patentansprüche**

1.  Mehrfachmikrofonumschaltverfahren für ein Konferenzsystem, umfassend:

S1: zufälliges Auswählen eines von Mikrofonsprachsignalen als ein Bezugs-Mikrofonsprachsignal als Reaktion auf ein Erkennen von Sprachsignalen von jeweiligen Mikrofon-Eingangskanälen;
S2: Abschätzen einer relativen Verzögerung jedes verbleibenden Mikrofonsprachsignals unter Verwendung des Bezugs-Mikrofonsprachsignals und Ausrichten der Mikrofonsprachsignale anhand von Rahmen; und
S3: Berechnen einer Sprachenergie jedes ausgerichteten Mikrofonsprachsignals und Ermitteln eines Ausgabekanals der Mikrofonsprachsignale in Verbindung mit einer Szenenerkennung; wobei
das Verfahren ferner umfasst:

auf Grundlage eines Nachverfolgens der Sprachenergie, Umschalten eines Ausgabekanals der Mikrofonsprachsignale mithilfe von Glätten; und wobei
wobei das Nachverfolgen der Sprachenergie ein Kurzzeitverfolgen und Langzeitverfolgen umfasst, ein Umschalten von einem Stummzustand in einen Sprachzustand auf Grundlage der Kurzzeitverfolgung implementiert ist und ein Umschalten des Ausgabekanals der Mikrofonsprachsignale in einen Langzeit-Stummzustand oder Sprachzustand auf Grundlage der Langzeitverfolgung implementiert ist; und
die Kurzzeitverfolgung ein Nachverfolgen von Sprachenergie in einer vorderen T1-Zeit ist, wobei T1 ein relativ kurzes Aufzeichnungsintervall ist, wie beispielsweise 200 ms;

die Langzeitverfolgung ein Nachverfolgen von Sprachenergie in einer vorderen T2-Zeit ist, wobei T2 ein relativ langes Aufzeichnungsintervall ist, wie beispielsweise 2 s.

2. Mehrfachmikrofonumschaltverfahren für ein Konferenzsystem nach Anspruch 1, wobei vor Schritt S1 das Verfahren ferner umfasst: Eliminieren eines entfernten Sprachsignals unter Verwendung eines Echokompensationsalgorithmus (AEC-Algorithmus) und eines Sprechpausenerkennungsalgorithmus (VAD-Algorithmus) und Ausgeben der Mikrofonsprachsignale mit einer über einem ersten Schwellenwert liegenden Sprachsignalstärke.

3. Mehrfachmikrofonumschaltverfahren für ein Konferenzsystem nach Anspruch 1, wobei der Ausrichtungsschritt in S2 umfasst: Speichern der Mikrofonsprachsignale anhand von Rahmen, Berechnen einer Abtastpunktposition eines Maximalkorrelationswerts zwischen dem von jedem Mikrofon erfassten Sprachsignal und dem Bezugs-Mikrofonsprachsignal $q_1$, Erhalten einer relativen Verzögerung jedes Mikrofonsprachsignals und Durchführen einer Ausrichtungsverarbeitung; wobei eine Berechnungsformel für die relative Verzögerung durch Formel (1) gezeigt ist:

$$R_i(n) = \sum_{j=0}^{N-1} q_1(j+n) \, q_i(j), i = 2,3,4,5 \qquad (1)$$

wobei in Formel (1) N eine Anzahl von Abtastwerten repräsentiert, die einer maximalen Sprachverzögerung entsprechen, n eine positive ganze Zahl in einem Bereich von 1 bis N ist, i ein i-tes Mikrofonsprachsignal repräsentiert, j einen j-ten Abtastpunkt eines Mikrofonsprachsignals repräsentiert, $q_1(j+n)$ einen Wert eines (j+n)-ten Punkts in einem Erfassungsrahmen des Bezugs-Mikrofonsprachsignals repräsentiert, $q_i(j)$ einen Wert eines j-ten Punkts eines i-ten Mikrofons repräsentiert und $R_i(n)$ einen linearen Korrelationswert zwischen dem i-ten Mikrofonsprachsignal und dem Bezugs-Mikrofonsprachsignal $q_1$ repräsentiert.

4. Mehrfachmikrofonumschaltverfahren für ein Konferenzsystem nach Anspruch 1, wobei die Sprachenergie in Schritt S3 durch Berechnen eines quadratischen Mittelwerts jedes Rahmens des jeweiligen ausgerichteten Mikrofonsprachsignals erhalten wird; wobei eine Berechnungsformel für den quadratischen Mittelwert durch Formel (2) gezeigt ist:

$$RMS_i = \sqrt{\frac{x_{i1}^2 + x_{i2}^2 + \cdots + x_{iL}^2}{L}}, i = 1,2,\ldots L \qquad (2)$$

wobei in Formel (2) Sprachdaten eines i-ten Mikrofons nach der Ausrichtung folgendermaßen ausgedrückt werden: $x_{i1}$, $x_{i2}$, ..., $x_{iL}$, wobei L eine Sprachrahmenlänge repräsentiert.

5. Mehrfachmikrofonumschaltverfahren für ein Konferenzsystem nach Anspruch 4, wobei die Sprachrahmenlänge mindestens 10 Rahmen des Mikrofonsprachsignals umfasst und eine Rahmengröße jedes Sprachrahmens auf 10 ms festgelegt ist.

6. Mehrfachmikrofonumschaltverfahren für ein Konferenzsystem nach Anspruch 1, wobei die Glättung sinusförmig ist und spezifische Berechnungsformeln durch Formel (4) und Formel (5) gezeigt sind:

$$gl\ddot{a}ttung1(i) = 0.5 * \left(\sin\left(\frac{i*\pi}{L} + \frac{\pi}{2}\right) + 1\right), i = 0,1,\ldots L-1 \qquad (4)$$

$$gl\ddot{a}ttung2(i) = 1 - gl\ddot{a}ttung1(i), i = 0,1,\ldots,L-1 \qquad (5)$$

wobei unter der Annahme, dass ein aktuelles Mikrofonsprachsignal $x_1$ ist und eine aktuelle Maximalsprachenergie $x_2$ ist, ein Mikrofonsprachsignal x nach dem Glätten gegeben ist durch:

$$x_{(i)} = gl\ddot{a}ttung1(i) * x_{1(i)} + gl\ddot{a}ttung2(i) * x_{2(i)}, i = 0,1,\ldots,L-1 \qquad (6)$$

7. Mehrfachmikrofonumschaltverfahren für ein Konferenzsystem nach Anspruch 1, wobei die Szenenerkennung spezifisch umfasst:

Beibehalten eines aktuellen Mikrofonausgabekanals als Reaktion auf ein Ermitteln durch eine Spracherkennungseinheit (401), dass ein aktueller Zustand ein Stummzustand ist;

Ausgeben eines Mikrofonkanals mit maximaler Sprachenergie als Reaktion darauf, dass eine Spracheingangsignalstärke eines aktuellen Mikrofons ständig über einem ersten Schwellenwert liegt und eine vom aktuellen Mikrofon erfasste Sprachenergie in Verbindung mit der Langzeitverfolgung maximal ist;

Beibehalten des aktuellen Mikrofonausgabekanals als Reaktion darauf, dass ein Verfolgen einer Sprachenergiedifferenz zwischen zwei Mikrofonkanälen unter einem zweiten Schwellenwert liegt;

Umschalten des Mikrofonausgabekanals auf einen Mikrofonausgabekanal mit steigender Sprachenergie als Reaktion darauf, dass das Verfolgen der Sprachenergiedifferenz zwischen zwei Mikrofonkanälen über dem zweiten Schwellenwert liegt; und

Erhöhen des zweiten Schwellenwerts und Beibehalten des aktuellen Mikrofonausgabekanals als Reaktion auf ein Verfolgen einer Duplexszene.

8. Computerlesbares Speichermedium, das ein Computerprogramm speichert, wobei das Programm das Verfahren nach einem der Ansprüche 1 bis 7 implementiert, wenn es von einem Prozessor ausgeführt wird.

9. Mehrfachmikrofonumschaltsystem für ein Konferenzsystem, umfassend:

eine Spracherkennungseinheit (401), die ausgelegt ist, zufällig eines von Mikrofonsprachsignalen als ein Bezugs-Mikrofonsprachsignal als Reaktion auf ein Erkennen von Sprachsignalen von jeweiligen Mikrofon-Eingangskanälen auszuwählen;

eine Verzögerungsabschätzungseinheit (402), die ausgelegt ist, eine relative Verzögerung jedes verbleibenden Mikrofonsprachsignals unter Verwendung des Bezugs-Mikrofonsprachsignals abzuschätzen und die Mikrofonsprachsignale anhand von Rahmen auszurichten; und

eine Energieberechnungseinheit (403), die ausgelegt ist, eine Sprachenergie jedes ausgerichteten Mikrofonsprachsignals zu berechnen und einen Ausgabekanal der Mikrofonsprachsignale in Verbindung mit einer Szenenerkennung zu ermitteln; wobei

die Spracherkennungseinheit (401) ferner ausgelegt ist:

auf Grundlage eines Nachverfolgens der Sprachenergie, einen Ausgabekanal der Mikrofonsprachsignale mithilfe von Glätten umzuschalten; und wobei

das Nachverfolgen der Sprachenergie ein Kurzzeitverfolgen und Langzeitverfolgen umfasst, ein Umschalten von einem Stummzustand in einen Sprachzustand auf Grundlage der Kurzzeitverfolgung implementiert ist und ein Umschalten des Ausgabekanals der Mikrofonsprachsignale in einen Langzeit-Stummzustand oder Sprachzustand auf Grundlage der Langzeitverfolgung implementiert ist; und

die Kurzzeitverfolgung ein Nachverfolgen von Sprachenergie in einer vorderen T1-Zeit ist, wobei T1 ein relativ kurzes Aufzeichnungsintervall ist, wie beispielsweise 200 ms;

die Langzeitverfolgung ein Nachverfolgen von Sprachenergie in einer vorderen T2-Zeit ist, wobei T2 ein relativ langes Aufzeichnungsintervall ist, wie beispielsweise 2 s.

**Revendications**

1. Procédé de commutation multi-microphone pour un système de conférence, comprenant :

S1 : sélectionner de manière aléatoire un de signaux vocaux de microphone en tant que signal vocal de microphone de référence en réponse à la détection de signaux vocaux provenant de canaux d'entrée de microphone respectifs ;

S2 : estimer un retard relatif de chaque signal vocal de microphone restant en utilisant le signal vocal de microphone de référence, et aligner les signaux vocaux de microphone par des trames ; et

S3 : calculer l'énergie vocale de chaque signal vocal de microphone aligné, et déterminer un canal de sortie des signaux vocaux de microphone en conjonction avec une reconnaissance de scène ; dans lequel

le procédé comprend en outre :

en fonction du traçage de l'énergie vocale, commuter un canal de sortie des signaux vocaux de microphone au moyen de lissage ; et dans lequel le traçage de l'énergie vocale comprend le traçage à court terme et le traçage à long terme, commuter d'un état muet à un état vocal est mis en oeuvre en fonction du traçage à court terme, et la commutation du canal de sortie des signaux vocaux de microphone dans un état muet ou état vocal à long terme est mise en oeuvre en fonction du traçage à long terme ; et

le traçage à court terme est le traçage d'énergie vocale dans un temps T1 avant, dans lequel T1 est un intervalle d'enregistrement relativement court, tel que 200 ms ;

le traçage à long terme est le traçage d'énergie vocale dans un temps T2 avant, dans lequel T2 est un intervalle d'enregistrement relativement long, tel que 2 s.

2. Procédé de commutation multi-microphone pour un système de conférence selon la revendication 1, dans lequel avant l'étape S1, le procédé comprenant en outre : éliminer un signal vocal distant en utilisant un algorithme d'annulation d'écho acoustique (AEA) et un algorithme de détection d'activité vocale (DAV), et émettre les signaux vocaux de microphone avec une intensité de signal vocal supérieure à une premier valeur seuil.

3. Procédé de commutation multi-microphone pour un système de conférence selon la revendication 1, dans lequel l'étape d'alignement en S2 comprend : stocker les signaux vocaux de microphone par trames, calculer une position de point d'échantillonnage d'une valeur de corrélation maximale entre le signal vocal acquis par chaque microphone et le signal vocal de microphone de référence $q_1$, obtenir le retard relatif de chaque signal vocal de microphone, et réaliser un traitement d'alignement ; une formule de calcul du retard relatif est illustrée par la formule (1) :

$$R_i(n) = \sum_{j=0}^{N-1} q_1(j+n)q_i(j), i = 2,3,4,5 \qquad (1)$$

dans laquelle, dans la formule (1), N représente un nombre d'échantillons correspondant à un retard vocal maximal, n est un entier positif qui va de 1 à N, i représente un $i^e$ signal vocal de microphone, j représente un $j^e$ point d'échantillonnage d'un signal vocal de microphone, $q_1(j+n)$ représente une valeur d'un $(j+n)^e$ point dans une trame d'acquisition du signal vocal de microphone de référence, $q_i(j)$ représente une valeur d'un $j^e$ point d'un $i^e$ microphone, et $R_i(n)$ représente une valeur de corrélation linéaire entre le $i^e$ signal vocal de microphone et le signal vocal de microphone de référence $q_1$.

4. Procédé de commutation multi-microphone pour un système de conférence selon la revendication 1, dans lequel l'énergie vocale à l'étape S3 est obtenue en calculant une valeur de moyenne quadratique de chaque trame de signal vocal de microphone aligné respectif ; une formule de calcul de la valeur de moyenne quadratique est illustrée par la formule (2) :

$$RMS_i = \sqrt{\frac{x_{i1}^2 + x_{i2}^2 + \cdots + x_{iL}^2}{L}}, i = 1,2, \dots L \qquad (2)$$

dans laquelle dans la formule (2), des données vocales d'un $i^e$ microphone après l'alignement sont exprimées en tant que : $x_{i1}$, $x_{i2}$, ..., $x_{iL}$, dans laquelle L représente une longueur de trame vocale.

5. Procédé de commutation multi-microphone pour un système de conférence selon la revendication 4, dans lequel la longueur de trame vocale comprend au moins 10 trames du signal vocal de microphone, et une taille de trame de chaque trame vocale est réglée sur 10 ms.

6. Procédé de commutation multi-microphone pour un système de conférence selon la revendication 1, dans lequel le lissage adopte une sinusoïde, et des formules de calcul spécifiques sont illustrées par la formule (4) et la formule (5) :

$$smooth1(i) = 0.5 * (\sin(\frac{i*\pi}{L} + \frac{\pi}{2}) + 1), i = 0,1,\dots,L-1 \qquad (4)$$

$$smooth2(i) = 1 - smooth1(i), i = 0,1,\dots,L-1 \qquad (5)$$

en supposant qu'un signal vocal de microphone actuel est $x_1$ et l'énergie vocale maximale actuelle est $x_2$, un signal vocal de microphone x après le lissage est :

$$x_{(i)} = smooth1(i) * x_{1(i)} + smooth2(i) * x_{2(i)}, i = 0,1,\ldots,L-1 \ (6)$$

7. Procédé de commutation multi-microphone pour un système de conférence selon la revendication 1, dans lequel la reconnaissance de scène comprend spécifiquement :

maintenir un canal de sortie de microphone actuel en réponse à la détermination du fait qu'un état actuel est un état muet par une unité de détection vocale (401) ;

émettre un canal de microphone avec une énergie vocale maximale en réponse à une intensité de signal d'entrée vocal d'un microphone actuel qui est constamment supérieure à un premier seuil et une énergie vocale acquise depuis le microphone actuel qui est maximale en conjonction avec un traçage à long terme ;

maintenir le canal de sortie de microphone actuel en réponse au traçage d'une différence d'énergie vocale entre deux canaux de microphone qui est inférieure à un second seuil ;

commuter le canal de sortie de microphone sur un canal de sortie de microphone à énergie vocale croissante en réponse au traçage de la différence d'énergie vocale entre deux canaux de microphone qui est supérieure au second seuil ; et augmenter le second seuil et maintenir le canal de sortie de microphone actuel en réponse au traçage d'une scène en duplex.

8. Support de stockage lisible par ordinateur stockant un programme informatique, dans lequel le programme met en oeuvre le procédé selon l'une quelconque des revendications 1 à 7 lors de son exécution par un processeur.

9. Système de commutation multi-microphone pour un système de conférence, comprenant :

une unité de détection vocale (401), configurée pour sélectionner de manière aléatoire un de signaux vocaux de microphone en tant que signal vocal de microphone de référence en réponse à la détection de signaux vocaux provenant de canaux d'entrée de microphone respectifs ;

une unité d'estimation de retard (402), configurée pour estimer un retard relatif de chaque signal vocal de microphone restant en utilisant le signal vocal de microphone de référence, et aligner les signaux vocaux de microphone par des trames ; et

une unité de calcul d'énergie (403), configurée pour calculer l'énergie vocale de chaque signal vocal de microphone aligné, et déterminer un canal de sortie des signaux vocaux de microphone en conjonction avec une reconnaissance de scène ; dans lequel

l'unité de détection vocale (401) est en outre configurée pour :

en fonction du traçage de l'énergie vocale, commuter un canal de sortie des signaux vocaux de microphone au moyen de lissage ; et dans lequel le traçage de l'énergie vocale comprend le traçage à court terme et le traçage à long terme, commuter d'un état muet à un état vocal est mis en oeuvre en fonction du traçage à court terme, et la commutation du canal de sortie des signaux vocaux de microphone dans un état muet ou état vocal à long terme est mise en oeuvre en fonction du traçage à long terme ; et

le traçage à court terme est le traçage d'énergie vocale dans un temps T1 avant, dans lequel T1 est un intervalle d'enregistrement relativement court, tel que 200 ms ;

le traçage à long terme est le traçage d'énergie vocale dans un temps T2 avant, dans lequel T2 est un intervalle d'enregistrement relativement long, tel que 2 s.

Randomly select one of microphone voice signals as a reference microphone voice signal in response to detection of voice signals from microphone input channels | S1

Estimate a relative delay of each remaining microphone voice signal by using the reference microphone voice signal, and align the microphone voice signals by frames | S2

Calculate voice energy of each aligned microphone voice signal, and determine an output channel of the microphone voice signals in conjunction with scene recognition | S3

FIG. 1

200

```
┌─────────────┐
│    Voice    │  201
│  detection  │
└─────────────┘
       │
       ▼
┌─────────────┐
│    Delay    │  202
│  estimation │
└─────────────┘
       │
       ▼
┌─────────────┐
│    Energy   │  203
│ calculation │
└─────────────┘
       │
       ▼
┌─────────────┐
│    Energy   │  204
│   tracking  │
└─────────────┘
       │
       ▼
┌─────────────┐
│    Scene    │  205
│ recognition │
└─────────────┘
       │
       ▼
┌─────────────┐
│  Microphone │  206
│  selection  │
└─────────────┘
       │
       ▼
┌─────────────┐
│  Smoothing  │  207
└─────────────┘
```

FIG. 2

Voice smoothing parameters

FIG. 3

FIG. 4

FIG. 5

600

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3122066 A1

- WO 2018164681 A1